(19) Europäisches Patentamt / European Patent Office / Office européen des brevets

(11) EP 4 661 140 A1

(12) **EUROPEAN PATENT APPLICATION**
published in accordance with Art. 153(4) EPC

(43) Date of publication:
**10.12.2025 Bulletin 2025/50**

(21) Application number: **24750079.6**

(22) Date of filing: **24.01.2024**

(51) International Patent Classification (IPC):
***H01M 10/0567*** (2010.01) ***H01M 10/052*** (2010.01)
***H01M 10/0568*** (2010.01) ***H01M 10/0587*** (2010.01)

(52) Cooperative Patent Classification (CPC):
**H01M 10/052; H01M 10/0567; H01M 10/0568; H01M 10/0587;** Y02E 60/10; Y02P 70/50

(86) International application number:
**PCT/JP2024/001999**

(87) International publication number:
**WO 2024/162129 (08.08.2024 Gazette 2024/32)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **30.01.2023 JP 2023011583**

(71) Applicant: **Panasonic Energy Co., Ltd.**
**Osaka 570-8511 (JP)**

(72) Inventor: **SASAYAMA, Katsuhiro**
**Kadoma-shi, Osaka 571-0057 (JP)**

(74) Representative: **Novagraaf International SA**
**Chemin de l'Echo 3**
**1213 Onex, Geneva (CH)**

(54) **NON-AQUEOUS ELECTROLYTE SECONDARY BATTERY**

(57) A non-aqueous electrolyte secondary battery (10) comprises: an electrode assembly (14) in which a positive electrode (11) and a negative electrode (12) are wound with a separator (13) therebetween; a non-aqueous electrolyte; and an outer can (16) that accommodates the electrode assembly (14) and the non-aqueous electrolyte. The negative electrode (12) has a negative electrode core (40), and a negative electrode mixture layer (41) provided to the surface of the negative electrode core (40). The electrode assembly (14) has, on the outer peripheral surface thereof, an exposed portion (42) in which the surface of the negative electrode core (40) is exposed, and the exposed portion (42) is in contact with an inner surface of the outer can (16). The non-aqueous electrolyte contains lithium hexafluorophosphate, and a cyclic carboxylic acid anhydride represented by formula (I).

[Chemical formula 1]

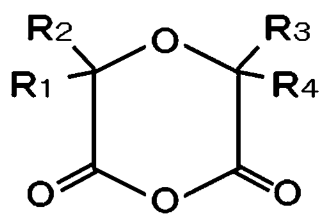

(in the formula, R1-R4 each independently represent H, an alkyl group, an alkene group, or an aryl group.)

EP 4 661 140 A1

Figure 1

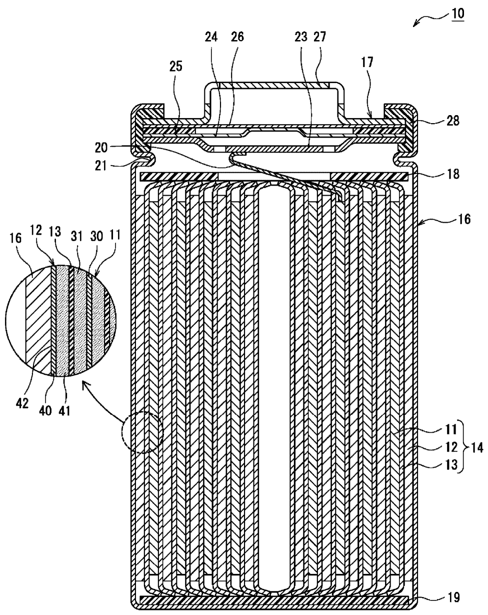
10
24
26
23
27
25
17
28
20
21
18
16
16
12
13
31
30
11
42
40
41
11
12
13
14
19

## Description

TECHNICAL FIELD

The present disclosure relates to a non-aqueous electrolyte secondary battery, and more particularly to a non-aqueous electrolyte secondary battery including a wound electrode assembly.

BACKGROUND

Conventionally, a non-aqueous electrolyte secondary battery is widely known, which includes an electrode assembly in which a positive electrode and a negative electrode are spirally wound with a separator interposed between the positive electrode and the negative electrode, a non-aqueous electrolyte, and an exterior can housing the electrode assembly and the non-aqueous electrolyte.

For example, Patent Literatures 1 and 2 disclose a non-aqueous electrolyte secondary battery having a structure in which an exposed portion in which a surface of a negative electrode core is exposed is formed on an outer peripheral surface of a wound electrode assembly and the exposed portion is in contact with an inner surface of a metal exterior can as a negative electrode external terminal for the purpose of reducing resistance and the like.

Patent Literature 3 proposes a non-aqueous electrolyte secondary battery including a non-aqueous electrolyte to which fluoroethylene carbonate and diglycolic anhydride are added.

CITATION LIST

PATENT LITERATURE

Patent Literature 1: JP 2013-254561 A
Patent Literature 2: JP 2019-145448 A
Patent Literature 3: WO 2022/163138 A

SUMMARY

The effect of reducing resistance is expected by bringing the exposed portion of the negative electrode core formed on the outer peripheral surface of the electrode assembly into contact with the inner surface of the exterior can, but as a result of studies by the present inventors, it has been found that a sufficient effect cannot be obtained due to metal elution from a metal member constituting the battery.

An object of the present disclosure is to provide a non-aqueous electrolyte secondary battery having low direct current resistance (DCR).

A non-aqueous electrolyte secondary battery according to the present disclosure includes an electrode assembly in which a positive electrode and a negative electrode are wound with a separator interposed between the positive electrode and the negative electrode, a non-aqueous electrolyte, and an exterior can housing the electrode assembly and the non-aqueous electrolyte, wherein the negative electrode includes a negative electrode core and a negative electrode mixture layer disposed on a surface of the negative electrode core, an exposed portion in which a surface of the negative electrode core is exposed is formed on an outer peripheral surface of the electrode assembly, the exposed portion is in contact with an inner surface of the exterior can, and the non-aqueous electrolyte contains lithium hexafluorophosphate and a cyclic carboxylic acid anhydride represented by a formula (I):

[Chemical Formula 1]

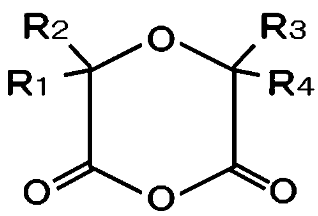

(in the formula, $R_1$ to $R_4$ each independently represent H, an alkyl group, an alkene group, or an aryl group).

According to the present disclosure, a non-aqueous electrolyte secondary battery having low direct current resistance (DCR) is obtained.

BRIEF DESCRIPTION OF DRAWING

FIG. 1 is a sectional view of a non-aqueous electrolyte secondary battery as an example of an embodiment.

DESCRIPTION OF EMBODIMENTS

As described above, as a result of studies by the present inventors, it has been found that even when a current collecting structure in which an exposed portion of a negative electrode core is in contact with an inner surface of an exterior can is adopted for the purpose of reducing the resistance of a battery, a sufficient effect of reducing resistance cannot be obtained due to metal elution from a metal member constituting the battery. Specifically, metal is eluted from the metal member (for example, the exterior can, the core, and the like) constituting the battery due to hydrogen fluoride generated by reaction of lithium hexafluorophosphate contained in a non-aqueous electrolyte with moisture in the battery, and is deposited on the inner surface of the exterior can and a surface of the negative electrode core in a state of a metal compound having low conductivity. Accordingly, it is considered that electrical contact between the exterior can and the negative electrode core is inhibited, and the effect of reducing the resistance of the battery cannot be sufficiently obtained.

Therefore, as a result of intensive studies to solve the above problems, the present inventors have found that when a cyclic carboxylic acid anhydride described later is contained in a non-aqueous electrolyte, generation of hydrogen fluoride is suppressed and metal elution from a metal member (for example, an exterior can, a core, and the like) constituting a battery is suppressed. It is presumed that since the cyclic carboxylic acid anhydride preferentially reacts with moisture in the battery, generation of hydrogen fluoride is suppressed. As a result, an excellent electrical contact state between the exterior can and the negative electrode core is maintained, so that a non-aqueous electrolyte secondary battery having low direct current resistance (DCR) is obtained.

Hereinafter, an example of an embodiment of a non-aqueous electrolyte secondary battery according to the present disclosure will be described in detail with reference to the drawings.

FIG. 1 is a cross-sectional view of a non-aqueous electrolyte secondary battery as an example of an embodiment. As illustrated in FIG. 1, the non-aqueous electrolyte secondary battery 10 includes an electrode assembly 14, a non-aqueous electrolyte, and an exterior can 16 housing the electrode assembly 14 and the non-aqueous electrolyte. The electrode assembly 14 includes a positive electrode 11, a negative electrode 12, and a separator 13, and has a wound structure in which the positive electrode 11 and the negative electrode 12 are spirally wound with the separator 13 interposed between the positive electrode 11 and the negative electrode 12. The exterior can 16 is a bottomed cylindrical metal container having an opening on one side in an axial direction. The non-aqueous electrolyte secondary battery 10 includes a sealing assembly 17, and the opening of the exterior can 16 is closed by the sealing assembly 17.

All of the positive electrode 11, the negative electrode 12, and the separator 13 included in the electrode assembly 14 are band-shaped long bodies, and spirally wound and thus alternately stacked in a radial direction of the electrode assembly 14. The negative electrode 12 is desirably formed to have a size slightly larger than that of the positive electrode 11 in order to prevent precipitation of lithium. That is, the negative electrode 12 is formed to be longer than the positive electrode 11 in a longitudinal direction and a width direction (lateral direction). The separator 13 is, for example, formed to have a size slightly larger than that of at least the positive electrode 11, and two separators are disposed so as to sandwich the positive electrode 11 therebetween. The non-aqueous electrolyte secondary battery 10 includes insulating plates 18 and 19 disposed on upper and lower portions of the electrode assembly 14, respectively.

The positive electrode 11 includes a positive electrode core 30 and a positive electrode mixture layer 31 disposed on a surface of the positive electrode core 30. Similarly, the negative electrode 12 includes a negative electrode core 40 and a negative electrode mixture layer 41 disposed on a surface of the negative electrode core 40. In the non-aqueous electrolyte secondary battery 10, the negative electrode 12 is disposed on an outer peripheral surface of the electrode assembly 14. That is, the outermost peripheral surface of the electrode assembly 14 is formed of the negative electrode 12. The electrode assembly 14 includes a positive electrode lead 20 connected to the positive electrode core 30 by welding or the like. In the present embodiment, a negative electrode lead is not disposed, but for example, a negative electrode lead may be disposed on the inner peripheral side of the electrode assembly 14.

An exposed portion 42 in which a surface of the negative electrode core 40 is exposed is formed on the outer peripheral surface of the electrode assembly 14. The exposed portion 42 may be formed on a portion of the outer peripheral surface of the electrode assembly 14, but is preferably formed on the entire outer peripheral surface. The exposed portion 42 may be formed only on the one surface (outer surface) of the negative electrode core 40 facing the outside of the electrode assembly 14, or may be formed on both surfaces of the negative electrode core 40. The exposed portion 42 is formed, for example, in a range of a length corresponding to about one to two circumferences of the circumferential length of the electrode assembly 14 from one end of the negative electrode core 40 in the longitudinal direction that is located on

the outer peripheral surface of the electrode assembly 14.

In the non-aqueous electrolyte secondary battery 10, the exposed portion 42 of the negative electrode 12 is in contact with an inner surface of the exterior can 16, and the negative electrode 12 and the exterior can 16 are electrically connected. Therefore, such a lead as the positive electrode lead 20 is unnecessary on the negative electrode side. For example, the exposed portion 42 is in contact with the inner surface of the exterior can 16 over the entire circumference of the electrode assembly 14. In the non-aqueous electrolyte secondary battery 10, the exterior can 16 serves as a negative electrode external terminal.

As described above, the exterior can 16 is the bottomed cylindrical metal container having the opening on the one side in the axial direction. A gasket 28 is disposed between the exterior can 16 and the sealing assembly 17 to ensure sealability of the inside of the battery and insulation between the exterior can 16 and the sealing assembly 17. The exterior can 16 has, for example, a groove portion 21 which supports the sealing assembly 17 and in which a part of a side surface portion protrudes inward. The groove portion 21 is preferably formed in an annular shape along a circumferential direction of the exterior can 16, and supports the sealing assembly 17 on its upper surface. The sealing assembly 17 is fixed to an upper portion of the exterior can 16 by the groove portion 21 and an opening end of the exterior can 16 swaged to the sealing assembly 17.

The sealing assembly 17 has a structure in which an internal terminal plate 23, a lower vent member 24, an insulating member 25, an upper vent member 26, and a cap 27 are sequentially stacked from the electrode assembly 14 side. Each of the members constituting the sealing assembly 17 has, for example, a disk shape or a ring shape, and the members excluding the insulating member 25 are electrically connected to each other. The lower vent member 24 and the upper vent member 26 are connected to each other at their central portions, and the insulating member 25 is interposed between circumferential portions of the lower vent member 24 and the upper vent member 26. When an abnormality occurs in the battery and the internal pressure of the battery increases, the lower vent member 24 deforms so as to push up the upper vent member 26 toward the cap 27 and breaks, and thus a current path between the lower vent member 24 and the upper vent member 26 is cut off. When the internal pressure further increases, the upper vent member 26 breaks, and gas is discharged from an opening of the cap 27.

The positive electrode lead 20 extends toward the sealing assembly 17 through a through-hole of the insulating plate 18, and is connected to a lower surface of the internal terminal plate 23, which is a bottom plate of the sealing assembly 17, by welding or the like. In the non-aqueous electrolyte secondary battery 10, the cap 27, which is a top plate of the sealing assembly 17 electrically connected to the internal terminal plate 23, serves as a positive electrode external terminal.

The positive electrode 11, the negative electrode 12, the separator 13, and the non-aqueous electrolyte will be described in detail.

[Positive Electrode]

As described above, the positive electrode 11 includes the positive electrode core 30 and the positive electrode mixture layer 31 disposed on the surface of the positive electrode core 30. As the positive electrode core 30, a foil of a metal, such as aluminum or an aluminum alloy, which is stable in a potential range of the positive electrode 11, a film in which the metal is disposed on a surface layer, or the like can be used. The positive electrode mixture layer 31 contains, for example, a positive electrode active material, a conductive agent, and a binder. The positive electrode mixture layer 31 may be formed on one surface or both surfaces of the positive electrode core 30 except for an exposed portion to which the positive electrode lead 20 is welded. The positive electrode 11 can be produced by, for example, applying a positive electrode mixture slurry containing a positive electrode active material, a conductive agent, a binder, and the like onto the positive electrode core 30, drying the applied film, and then compressing the film to form the positive electrode mixture layer 31 on the positive electrode core 30.

Examples of the positive electrode active material include lithium transition metal oxides containing transition metal elements such as Co, Mn, and Ni. Examples of the lithium transition metal oxides include $Li_xCoO_2$, $Li_xNiO_2$, $Li_xMnO_2$, $Li_xCo_yNi_{1-y}O_2$, $Li_xCo_yM_{1-y}O_z$, $Li_xNi_{1-y}M_yO_z$, $Li_xMn_2O_4$, $Li_xMn_{2-y}M_yO_4$, $LiMPO_4$, and $Li_2MPO_4F$. In the above chemical formulas, M is, for example, at least one of Na, Mg, Ca, Sc, Ti, V, Y, Mn, Fe, Co, Ni, Cu, Zn, Al, Ga, Ge, Cr, Pb, Zr, Sn, Sb, B, W, and Pb, and x, y, and z satisfy, for example, $0 < x \leq 1.2$, $0 < y \leq 0.9$, and $2.0 \leq z \leq 2.3$. These may be used singly or in combination of two or more kinds thereof. From the viewpoint of increasing the capacity of the non-aqueous electrolyte secondary battery, the positive electrode active material preferably contains a lithium nickel composite oxide such as $Li_xNiO_2$, $Li_xCo_yN_{i1-y}O_2$, or $Li_xNi_{1-y}M_yO_z$ (M is at least one of Na, Mg, Ca, Sc, Ti, V, Y, Mn, Fe, Co, Ni, Cu, Zn, Al, Ga, Ge, Cr, Pb, Zr, Sn, Sb, B, W, and Pb, and x, y, and z satisfy, for example, $0 < x \leq 1.2$, $0 < y \leq 0.9$, and $2.0 \leq z \leq 2.3$).

Examples of the binder include fluorine-based resins such as polytetrafluoroethylene (PTFE) and polyvinylidene fluoride (PVDF), polyacrylonitrile (PAN), polyimide-based resins, acrylic resins, polyolefin-based resins, styrene-butadiene rubber (SBR), carboxymethyl cellulose (CMC) or a salt thereof, polyacrylic acid (PAA) or a salt thereof, polyvinyl alcohol (PVA), and polyethylene oxide (PEO). Among them, one type may be used alone, or two or more types may be

used in combination. Examples of the conductive agent include carbon materials such as carbon black (CB), acetylene black (AB), Ketjenblack, and carbon nanotube. Among them, one type may be used alone, or two or more types may be used in combination.

[Negative Electrode]

As described above, the negative electrode 12 includes the negative electrode core 40 and the negative electrode mixture layer 41 disposed on the surface of the negative electrode core 40. In the negative electrode 12, the exposed portion 42 in which the surface of the negative electrode core 40 is exposed is formed in a portion corresponding to the outer peripheral surface of the electrode assembly 14. As the negative electrode core 40, a foil of a metal, such as copper or a copper alloy, which is stable in a potential range of the negative electrode 12, a film in which the metal is disposed on a surface layer, or the like can be used. The negative electrode mixture layer 41 contains, for example, a negative electrode active material, a binder, and the like. The negative electrode mixture layer 41 may be formed on one side or both sides of the negative electrode core 40 except for the exposed portion 42. The negative electrode 12 can be produced by, for example, applying a negative electrode mixture slurry containing a negative electrode active material, a conductive agent, a binder, and the like onto the negative electrode core 40, drying the applied film, and then compressing the film to form the negative electrode mixture layer 41 on the negative electrode core 40.

The negative electrode active material is not particularly limited as long as the negative electrode active material reversibly stores and releases ions such as lithium ions, and examples of the negative electrode active material include a carbon-based material. Examples of the carbon material include natural graphite such as flake graphite, massive graphite, and earthy graphite, and artificial graphite such as massive artificial graphite (MAG) and graphitized mesophase-carbon microbeads (MCMB). As the negative electrode active material, Si or a Si-based material such as a Si-containing compound may be used. Since the volume of the Si-based material greatly changes with charging and discharging as compared with the carbon-based material, when the negative electrode mixture layer 41 contains the Si-based material, the exposed portion 42 is strongly pressed against the inner surface of the exterior can 16, and a better contact state can be obtained.

The Si-based material contains, for example, a lithium ion conducting phase and Si particles dispersed in the lithium ion conducting phase. The lithium ion conducting phase contains, for example, at least one of a silicon oxide phase, a silicate phase, and a carbon phase.

The silicate phase preferably contains, for example, at least one element of alkali metal elements of lithium, sodium, potassium, rubidium, cesium, and francium, and Group 2 elements of the periodic table to which beryllium, magnesium, calcium, strontium, barium, and radium belong from the viewpoint of high lithium ion conductivity and the like. Among them, the silicate phase is preferably a silicate phase containing lithium (hereinafter, may be referred to as a lithium silicate phase) from the viewpoint of high lithium ion conductivity and the like.

The lithium silicate phase is represented by, for example, a formula: $Li_{2z}SiO_{2+z}$ ($0 < z < 2$). From the viewpoints of stability, ease of production, lithium ion conductivity, and the like, z preferably satisfies a relationship of $0 < z < 1$, and more preferably $z = 1/2$.

The Si-based material in which the Si particles are dispersed in the silicon oxide phase is represented by, for example, a general formula $SiO_x$ (a range of $0 < x < 2$ is preferable, and a range of $0.5 \leq x \leq 1.6$ is more preferable). The Si-based material in which the Si particles are dispersed in the carbon phase is represented by, for example, a general formula $Si_xC_y$ (ranges of $0 < x \leq 1$ and $0 < y \leq 1$ are preferable).

A conductive layer coated with conductive carbon may be formed on a surface of the Si-based material. The conductive layer can be formed with, for example, a CVD method in which acetylene, methane, or the like is used, a method in which coal pitch, petroleum pitch, a phenol resin, or the like is mixed with a silicon-based active material and the mixture is heat-treated, or the like. As a heat treatment apparatus that performs the heat treatment, for example, a hot air furnace, a hot press, a lamp, a sheath heater, a ceramic heater, a rotary kiln, or the like can be used. In addition, the conductive layer may be formed by fixing a conductive filler such as carbon black to a particle surface of the Si-based material using a binding material.

Examples of the material capable of reversibly storing and releasing ions such as lithium ions include Sn, Sn-containing alloys, Sn-based materials such as a tin oxide, and Ti-based materials such as lithium titanate, in addition to carbon-based materials and Si-based materials.

As the binder, materials similar to those exemplified for the positive electrode 11 can be used. In addition, the negative electrode mixture layer 41 may contain a conductive agent. As the conductive agent, agents similar to those exemplified for the positive electrode 11 can be used.

[Separator]

As the separator 13, for example, a porous sheet having ion permeability and insulating properties is used.

Specific examples of the porous sheet include a microporous thin film, a woven fabric, and a nonwoven fabric. As a material of the separator 13, polyolefin such as polyethylene and polypropylene, and cellulose are suitable. The separator 13 may have a single-layer structure or a multilayer structure. Further, a resin layer having high heat resistance, such as an aramid resin, may be formed on a surface of the separator 13.

A filler layer containing an inorganic filler may be formed at an interface between the separator 13 and at least one of the positive electrode 11 and the negative electrode 12. Examples of the inorganic filler include oxides containing metal elements such as Ti, Al, Si, and Mg, and phosphoric acid compounds. The filler layer can be formed by applying a slurry containing the filler to a surface of the positive electrode 11, the negative electrode 12, or the separator 13.

[Non-Aqueous Electrolyte]

The non-aqueous electrolyte contains an electrolyte salt and a cyclic carboxylic acid anhydride represented by the following formula (I).

[Chemical Formula 2]

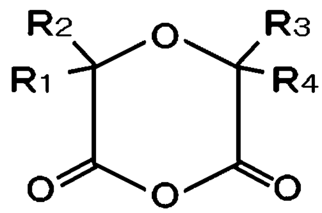

(In the formula, $R_1$ to $R_4$ each independently represent H, an alkyl group, an alkene group, or an aryl group. The alkyl group is, for example, an alkyl group having 1 to 5 carbon atoms, such as a methyl group or an ethyl group, the alkene group is, for example, an alkene group having 2 to 5 carbon atoms, such as an ethylene group or a propylene group, and the aryl group is, for example, an aryl group having 6 to 10 carbon atoms, such as a phenyl group and a benzyl group.)

The electrolyte salt contains lithium hexafluorophosphate ($LiPF_6$). The electrolyte salt may contain a conventionally known electrolyte salt in addition to the lithium hexafluorophosphate.

The non-aqueous electrolyte has, for example, ion conductivity (for example, lithium ion conductivity).

The non-aqueous electrolyte contains, for example, a non-aqueous solvent in addition to the lithium hexafluorophosphate and the cyclic carboxylic acid anhydride. As the non-aqueous solvent, for example, esters, ethers, nitriles, amides, and mixed solvents of two or more thereof are used. Examples of the non-aqueous solvent include ethylene carbonate (EC), ethyl methyl carbonate (EMC), dimethyl carbonate (DMC), diethyl carbonate (DEC), and mixed solvents thereof. The non-aqueous solvent may contain a halogen-substituted product obtained by substituting at least some of hydrogen of these solvents with a halogen atom such as fluorine. Examples of the halogen-substituted product include fluorinated cyclic carbonic acid esters such as fluoroethylene carbonate (FEC), fluorinated chain carbonic acid esters, and fluorinated chain carboxylic acid esters such as methyl fluoropropionate (FMP). The non-aqueous electrolyte may contain an additive such as vinylene carbonate (VC). The concentration of the electrolyte salt is, for example, greater than or equal to 0.8 mol and less than or equal to 4 mol per 1 L of the non-aqueous solvent.

The cyclic carboxylic acid anhydride is not particularly limited as long as the cyclic carboxylic acid anhydride is a substance represented by the above-described formula (I), and specific examples of the cyclic carboxylic acid anhydride include diglycolic anhydride, methyldiglycolic anhydride, dimethyldiglycolic anhydride, ethyldiglycolic anhydride, vinyldiglycolic anhydride, allyldiglycolic anhydride, and divinyldiglycolic anhydride. These may be used singly or in combination of two or more kinds thereof. Among them, diglycolic anhydride is preferable, for example, from the viewpoint of reducing the resistance of the battery.

The content of the cyclic carboxylic acid anhydride is, for example, preferably in a range greater than or equal to 0.1% by mass and less than or equal to 2% by mass, and more preferably in a range greater than or equal to 0.2% by mass and less than or equal to 1% by mass, based on the total mass of the non-aqueous electrolyte, from the viewpoint of reducing the resistance of the battery.

The non-aqueous electrolyte preferably contains fluoroethylene carbonate (FEC). When the non-aqueous electrolyte contains FEC, a stable protective film (SEI film) is formed on the negative electrode, which may contribute to improvement of cycle characteristics. On the other hand, there is a concern that metal elution from a metal member such as the exterior can 16 may be promoted by FEC and that the resistance of the battery may increase. However, in the present embodiment, even when the non-aqueous electrolyte contains FEC, the metal elution from the metal member is suppressed and the resistance of the battery is reduced by the effect of adding the cyclic carboxylic acid anhydride.

The content of FEC is not particularly limited, but is, for example, preferably greater than or equal to 3% by mass

and less than or equal to 7% by mass based on the total mass of the non-aqueous electrolyte.

EXAMPLES

The present disclosure will be further described below with reference to Examples. However, the present disclosure is not limited to these Examples.

<Example 1>

[Production of Positive Electrode]

As the positive electrode active material, a lithium-containing transition metal composite oxide represented by $LiNi_{0.88}Co_{0.09}Al_{0.03}O_2$ was used. 100 parts by mass of the positive electrode active material, 1 part by mass of acetylene black, and 0.9 parts by mass of polyvinylidene fluoride were mixed and N-methyl-2-pyrrolidone (NMP) was used as a dispersion medium to prepare a positive electrode mixture slurry. Next, the positive electrode mixture slurry was applied to both surfaces of a positive electrode core formed of an aluminum foil, and the applied film was dried and compressed, and then cut into a predetermined electrode size to prepare a positive electrode in which a positive electrode mixture layer was formed on both surfaces of the positive electrode core. An exposed portion in which a surface of the core was exposed was disposed at a central portion of the positive electrode in a longitudinal direction, and a positive electrode lead was ultrasonically welded to the exposed portion.

[Production of Negative Electrode]

A graphite powder as the negative electrode active material, carboxymethyl cellulose (CMC), and a dispersion of styrene-butadiene rubber (SBR) were mixed at a solid content mass ratio of 100:1:1 and water was used as a dispersion medium to prepare a negative electrode mixture slurry. Next, the negative electrode mixture slurry was applied to both surfaces of a negative electrode core formed of a copper foil, and the applied film was dried and compressed, and then cut into a predetermined electrode size to prepare a negative electrode in which a negative electrode mixture layer was formed on both surfaces of the negative electrode core. An exposed portion in which a surface of the core was exposed was disposed at one end portion of the negative electrode in a longitudinal direction.

[Preparation of Non-Aqueous Electrolyte]

$LiPF_6$ was dissolved at a concentration of 1.4 M in a non-aqueous solvent obtained by mixing ethylene carbonate (EC), ethyl methyl carbonate (EMC), and dimethyl carbonate (DMC) at a volume ratio of 20:5:75, and fluoroethylene carbonate (FEC) and diglycolic anhydride were further added thereto. The contents of FEC and diglycolic anhydride were adjusted to 7% by mass and 1% by mass, respectively, based on the total mass of the non-aqueous electrolyte.

[Production of Non-Aqueous Electrolyte Secondary Battery]

The positive electrode and the negative electrode were spirally wound with a polyethylene separator interposed between the positive electrode and the negative electrode to produce a wound electrode assembly. In this case, each of the electrodes and the separator were wound such that the positive electrode mixture layer faced the negative electrode mixture layer with the separator interposed between the positive electrode mixture layer and the negative electrode mixture layer, and the exposed portion of the negative electrode constituted an outer peripheral surface of the electrode assembly. After insulating plates were disposed on upper and lower portions of the electrode assembly, a positive electrode lead was welded to an internal terminal plate of a sealing assembly, and the electrode assembly was housed in an exterior can. Thereafter, the non-aqueous electrolyte was injected into the exterior can with a decompression method, and an opening of the exterior can was sealed with the sealing assembly via a gasket to produce a cylindrical non-aqueous electrolyte secondary battery. This battery has a current collecting structure in which the exposed portion of the negative electrode core is in contact with an inner surface of the exterior can.

<Example 2>

A non-aqueous electrolyte secondary battery was produced in the same manner as in Example 1 except that the content of diglycolic anhydride was 3% by mass based on the total mass of the non-aqueous electrolyte in the preparation of the non-aqueous electrolyte.

<Example 3>

A non-aqueous electrolyte secondary battery was produced in the same manner as in Example 1 except that the content of FEC was 2% by mass based on the total mass of the non-aqueous electrolyte in the preparation of the non-aqueous electrolyte.

<Example 4>

A non-aqueous electrolyte secondary battery was produced in the same manner as in Example 1 except that FEC was not added in the preparation of the non-aqueous electrolyte.

<Comparative Example 1>

A non-aqueous electrolyte secondary battery was produced in the same manner as in Example 1 except that diglycolic anhydride and FEC were not added in the preparation of the non-aqueous electrolyte.

<Comparative Example 2>

A non-aqueous electrolyte secondary battery was produced in the same manner as in Example 1 except that diglycolic anhydride was not added in the preparation of the non-aqueous electrolyte.

<Comparative Example 3>

A non-aqueous electrolyte secondary battery was produced in the same manner as in Example 1 except that diglycolic anhydride was not added and the content of FEC was 2% by mass based on the total mass of the non-aqueous electrolyte in the preparation of the non-aqueous electrolyte.

[Evaluation of Direct Current Resistance (DCR)]

The non-aqueous electrolyte secondary batteries in Examples and Comparative Examples were charged at a constant current of 0.2 C in a temperature environment of 25°C until 4.2 V was reached, and then charged at a constant voltage of 4.2 V until 0.05 C was reached. Thereafter, the batteries were discharged at a constant current of 0.2 C until 2.5 V was reached. The non-aqueous electrolyte secondary batteries after the initial charging and discharging were charged at a constant current of 0.2 C in a temperature environment of 25°C until the states of charge (SOC) reached 50%. Thereafter, the batteries were rested for 2 hours, and the direct current resistances (DCR) were calculated from voltage drops before and after discharging at 0.3 C for 30 seconds.

[Charge-Discharge Cycle Test]

The non-aqueous electrolyte secondary batteries in Examples and Comparative Examples were charged at a constant current of 0.5 C in a temperature environment of 25°C until 4.2 V was reached, and then discharged at a constant current of 0.5 C until 2.5 V was reached. This charge-discharge cycle was defined as 1 cycle, 300 cycles were performed, and the capacity retention rates were determined based on the following formula. It is to be noted that the higher the value of the capacity retention rate, the more the degradation of the charge-discharge cycle characteristics was suppressed.

The capacity retention rate (%) = (the discharge capacity at the 300th cycle/the discharge capacity at the 1st cycle) × 100

Table 1 summarizes the results of the direct current resistance (DCR) and the capacity retention rate in the charge-discharge cycle test in each of Examples and Comparative Examples. Regarding the DC resistances described in Table 1, the DC resistance in Comparative Example 1 is used as a reference (100), and the DC resistances in the other Examples and Comparative Examples are shown as relative values.

[Table 1]

| | Non-aqueous electrolyte | | Test results | |
|---|---|---|---|---|
| | Content of FEC | Content of diglycolic anhydride | DC resistance (DCR) | Capacity retention rate |
| Example 1 | 7% by mass | 1% by mass | 97 | 90% |
| Example 2 | 7% by mass | 3% by mass | 99 | 89% |
| Example 3 | 2% by mass | 1% by mass | 97 | 84% |
| Example 4 | - | 1% by mass | 98 | 83% |
| Comparative Example 1 | - | - | 100 | 80% |
| Comparative Example 2 | 7% by mass | - | 112 | 88% |
| Comparative Example 3 | 2% by mass | - | 105 | 83% |

When Example 4 and Comparative Example 1 in which lithium hexafluorophosphate was contained and FEC was not contained are compared, the DC resistance in Example 4 in which diglycolic anhydride was contained was lower than that in Comparative Example 1 in which diglycolic anhydride was not contained. In addition, when Examples 1 and 2 and Comparative Example 2 in which lithium hexafluorophosphate was contained and FEC was contained at 7% by mass were compared, the DC resistances in Examples 1 and 2 in which diglycolic anhydride was contained were lower than that in Comparative Example 2 in which diglycolic anhydride was not contained. When Example 3 and Comparative Example 3 in which lithium hexafluorophosphate was contained and FEC was contained at 2% by mass are compared, the DC resistance in Example 3 in which diglycolic anhydride was contained was lower than that in Comparative Example 3 in which diglycolic anhydride was not contained. From these results, it is considered that by using the non-aqueous electrolyte containing cyclic carboxylic acid anhydride, good electrical contact between the exterior can and the negative electrode core (exposed portion) was secured and the direct current resistance (DCR) of the battery was kept low.

Among Examples 1 to 4, the capacity retention rates in Examples 1 to 3 in which FEC was contained were higher than that in Example 4 in which FEC was not contained and a decrease in the charge-discharge cycle characteristics was suppressed in Examples 1 to 3.

[Supplementary Notes]

(1) A non-aqueous electrolyte secondary battery includes:

an electrode assembly in which a positive electrode and a negative electrode are wound with a separator interposed between the positive electrode and the negative electrode;
a non-aqueous electrolyte; and
an exterior can housing the electrode assembly and the non-aqueous electrolyte, wherein
the negative electrode includes a negative electrode core and a negative electrode mixture layer disposed on a surface of the negative electrode core,
an exposed portion in which a surface of the negative electrode core is exposed is formed on an outer peripheral surface of the electrode assembly, the exposed portion is in contact with an inner surface of the exterior can, and
the non-aqueous electrolyte contains lithium hexafluorophosphate and a cyclic carboxylic acid anhydride represented by a formula (I):

[Chemical Formula 3]

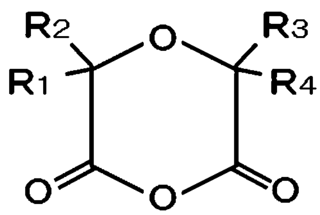

where $R_1$ to $R_4$ each independently represent H, an alkyl group, an alkene group, or an aryl group.

(2) The non-aqueous electrolyte secondary battery according to (1), wherein the cyclic carboxylic acid anhydride contains diglycolic anhydride.
(3) The non-aqueous electrolyte secondary battery according to (1) or (2), wherein a content of the cyclic carboxylic acid anhydride is greater than or equal to 0.1% by mass and less than or equal to 2% by mass based on a total mass of the non-aqueous electrolyte.
(4) The non-aqueous electrolyte secondary battery according to any one of (1) to (3), wherein the non-aqueous electrolyte contains fluoroethylene carbonate.
(5) The non-aqueous electrolyte secondary battery according to (4), wherein a content of the fluoroethylene carbonate is greater than or equal to 3% by mass and less than or equal to 7% by mass based on a total mass of the non-aqueous electrolyte.

REFERENCE SIGNS LIST

| | |
|---|---|
| 10 | Non-aqueous electrolyte secondary battery |
| 11 | Positive electrode |
| 12 | Negative electrode |
| 13 | Separator |
| 14 | Electrode assembly |
| 16 | Exterior can |
| 17 | Sealing assembly |
| 18, 19 | Insulating plate |
| 20 | Positive electrode lead |
| 21 | Groove portion |
| 23 | Internal terminal plate |
| 24 | Lower vent member |
| 25 | Insulating member |
| 26 | Upper vent member |
| 27 | Cap |
| 28 | Gasket |
| 30 | Positive electrode core |
| 31 | Positive electrode mixture layer |
| 40 | Negative electrode core |
| 41 | Negative electrode mixture layer |
| 42 | Exposed portion |

## Claims

**1.** A non-aqueous electrolyte secondary battery comprising:

an electrode assembly in which a positive electrode and a negative electrode are wound with a separator interposed between the positive electrode and the negative electrode;
a non-aqueous electrolyte; and
an exterior can housing the electrode assembly and the non-aqueous electrolyte, wherein
the negative electrode includes a negative electrode core and a negative electrode mixture layer disposed on a surface of the negative electrode core,
an exposed portion in which a surface of the negative electrode core is exposed is formed on an outer peripheral surface of the electrode assembly, the exposed portion is in contact with an inner surface of the exterior can, and
the non-aqueous electrolyte contains lithium hexafluorophosphate and a cyclic carboxylic acid anhydride represented by a formula (I):

[Chemical Formula 1]

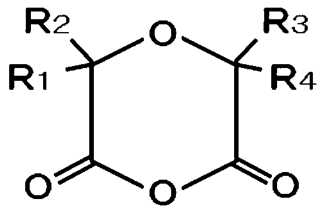

where $R_1$ to $R_4$ each independently represent H, an alkyl group, an alkene group, or an aryl group.

**2.** The non-aqueous electrolyte secondary battery according to claim 1, wherein the cyclic carboxylic acid anhydride contains diglycolic anhydride.

**3.** The non-aqueous electrolyte secondary battery according to claim 1 or 2, wherein a content of the cyclic carboxylic acid anhydride is greater than or equal to 0.1% by mass and less than or equal to 2% by mass based on a total mass of the non-aqueous electrolyte.

**4.** The non-aqueous electrolyte secondary battery according to claim 1 or 2, wherein the non-aqueous electrolyte contains fluoroethylene carbonate.

**5.** The non-aqueous electrolyte secondary battery according to claim 4, wherein a content of the fluoroethylene carbonate is greater than or equal to 3% by mass and less than or equal to 7% by mass based on a total mass of the non-aqueous electrolyte.

# Figure 1

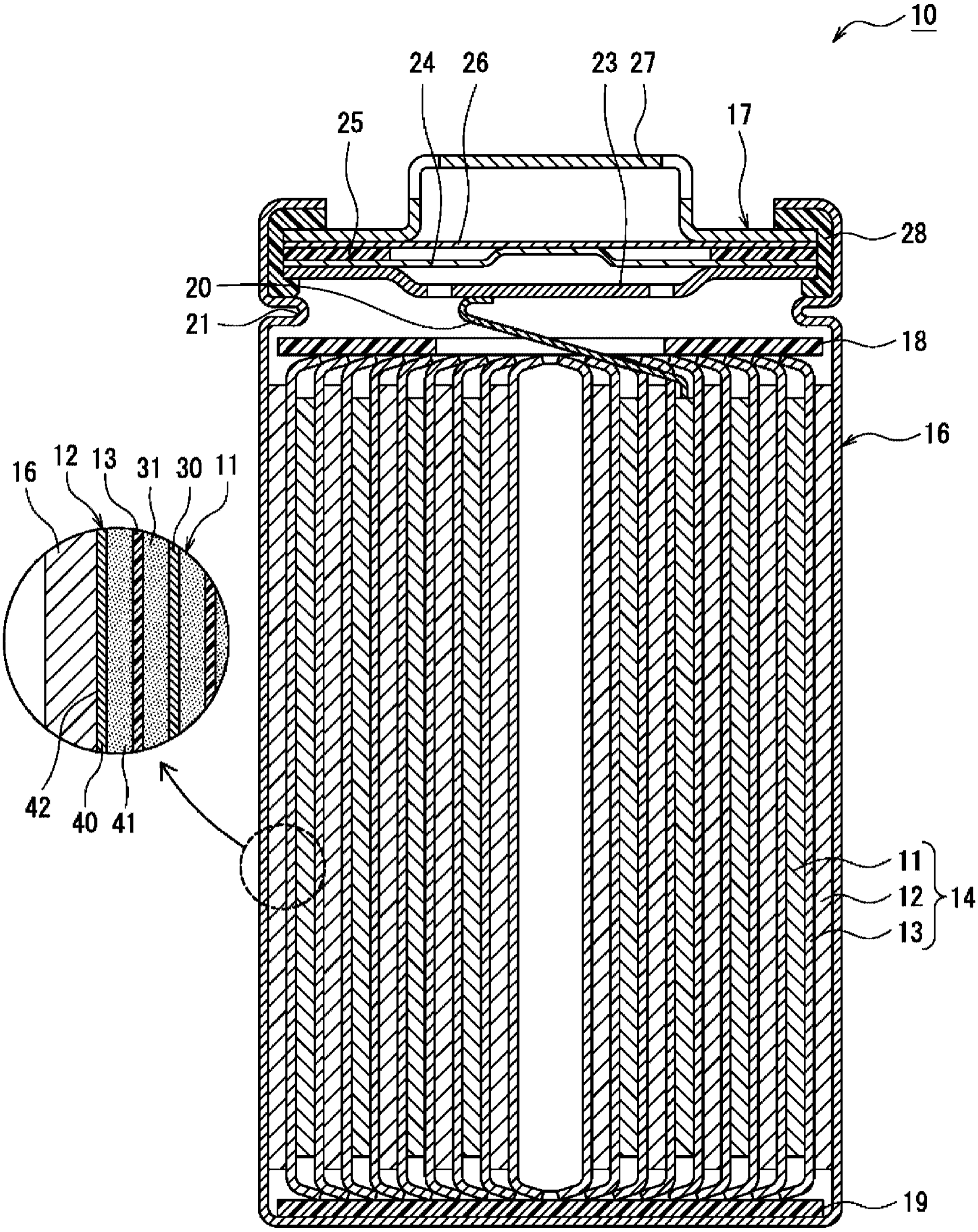
10
24
26
23
27
25
17
28
20
21
18
16
16
12
13
31
30
11
42
40
41
11
12
13
14
19

## INTERNATIONAL SEARCH REPORT

International application No. **PCT/JP2024/001999**

**A. CLASSIFICATION OF SUBJECT MATTER**

***H01M 10/0567***(2010.01)i; ***H01M 10/052***(2010.01)i; ***H01M 10/0568***(2010.01)i; ***H01M 10/0587***(2010.01)i
FI: H01M10/0567; H01M10/052; H01M10/0568; H01M10/0587

According to International Patent Classification (IPC) or to both national classification and IPC

**B. FIELDS SEARCHED**

Minimum documentation searched (classification system followed by classification symbols)

H01M10/0567; H01M10/052; H01M10/0568; H01M10/0587

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| Y | WO 2020/175232 A1 (SANYO ELECTRIC CO., LTD.) 03 September 2020 (2020-09-03) claims 1-4, paragraph [0008], example 1, fig. 1 | 1-5 |
| Y | WO 2019/202835 A1 (PANASONIC INTELLECTUAL PROPERTY MANAGEMENT CO., LTD.) 24 October 2019 (2019-10-24) example 1, table 1 | 1-5 |
| Y | JP 07-122297 A (SANYO ELECTRIC CO., LTD.) 12 May 1995 (1995-05-12) paragraph [0010] | 1-5 |
| Y | CN 111900481 A (ZHEJIANG UNIVERSITY OF TECHNOLOGY) 06 November 2020 (2020-11-06) paragraph [0005] | 1-5 |
| Y | JP 2013-051202 A (MITSUBISHI CHEMICAL CORPORATION) 14 March 2013 (2013-03-14) claims 1-2, example 3-1, table 3 | 5 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **05 April 2024** | **16 April 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**

International application No.
**PCT/JP2024/001999**

**C. DOCUMENTS CONSIDERED TO BE RELEVANT**

| Category* | Citation of document, with indication, where appropriate, of the relevant passages | Relevant to claim No. |
|---|---|---|
| A | WO 2019/097951 A1 (PANASONIC INTELLECTUAL PROPERTY MANAGEMENT CO., LTD.) 23 May 2019 (2019-05-23) entire text, all drawings | 1-5 |
| A | WO 2018/179882 A1 (PANASONIC INTELLECTUAL PROPERTY MANAGEMENT CO., LTD.) 04 October 2018 (2018-10-04) entire text, all drawings | 1-5 |
| A | JP 2002-008717 A (MITSUI CHEMICALS, INC.) 11 January 2002 (2002-01-11) entire text, all drawings | 1-5 |
| A | KR 10-2016-0014460 A (LG CHEM, LTD.) 11 February 2016 (2016-02-11) entire text, all drawings | 1-5 |

Form PCT/ISA/210 (second sheet) (July 2022)

**INTERNATIONAL SEARCH REPORT**
**Information on patent family members**

International application No.
**PCT/JP2024/001999**

| Patent document cited in search report | Publication date (day/month/year) | Patent family member(s) | Publication date (day/month/year) |
|---|---|---|---|
| WO 2020/175232 A1 | 03 September 2020 | US 2022/0140390 A1<br>claims 1-4, paragraph [0008], example 1, fig. 1<br>EP 3933966 A1 | |
| WO 2019/202835 A1 | 24 October 2019 | US 2021/0159539 A1<br>example 1, table 1<br>CN 111971844 A | |
| JP 07-122297 A | 12 May 1995 | (Family: none) | |
| CN 111900481 A | 06 November 2020 | (Family: none) | |
| JP 2013-051202 A | 14 March 2013 | US 2013/0316229 A1<br>claims 1-2, example 3-1, table 3<br>WO 2012/105404 A1<br>EP 2672561 A1 | |
| WO 2019/097951 A1 | 23 May 2019 | US 2020/0373574 A1<br>entire text, all drawings<br>EP 3712992 A1 | |
| WO 2018/179882 A1 | 04 October 2018 | US 2020/0020985 A1<br>entire text, all drawings<br>CN 110383563 A | |
| JP 2002-008717 A | 11 January 2002 | (Family: none) | |
| KR 10-2016-0014460 A | 11 February 2016 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2013254561 A
- JP 2019145448 A
- WO 2022163138 A